# EUROPEAN PATENT APPLICATION

(11) **EP 1 936 556 A2**
(43) Date of publication of application: **25.06.2008**
(21) Application number: 07016915.6
(22) Date of filing: 29.08.2007
(51) Int. Cl.: G06Q 10/00

(54) **Electric comic book delivering server, system for delivering electric comic book and method of delivering electric comic book**

(30) Priority: 20.12.2006 JP 2006342384
(71) Applicant: Kabushiki Kaisha Toshiba, Minato-ku, Tokyo 105-8001 (JP)
(72) Inventor: Kunimatsu, Atsushi, Tokyo 105-8001 (JP); Miura, Akira, Tokyo 105-8001 (JP)
(74) Representative: HOFFMANN EITLE

(57) **Abstract**

An electric comic book delivering server delivers translated electric comic book by transmitting original electric comic book data, mask data and translation data to a client terminal via a communication network. The mask data is used to mask a display portion of first language. The translation data is used to superimpose a display portion of second language on the masked display portion of first language. When the electric comic book delivering server obtains mask data and translation data from another client terminal in which the mask data and the translation data have been created, the electric comic book delivering server registers the mask data and the translation data into a database thereof. The comic book delivering server transmits payment demand information to a client whenever the server transmits, to the client, the original electric comic book data, the mask data and the translation data thus registered.

## Description

### CROSS-REFERENCE TO RELATED APPLICATIONS

This application is based upon and claims the benefit of priority from the prior Japanese Patent Application No. 2006-342384, filed on December 20, 2006, the entire contents of which are expressly incorporated herein by reference in its entirety.

### BACKGROUND OF THE INVENTION

### 1. Field of the Invention

The present invention relates to: an electric comic book delivering server for delivering an electric comic book to a client terminal via a communication network, the client terminal being connected to the communication network; a system for delivering an electric comic book; and a method of delivering an electric comic book.

### 2. Description of the Prior Art

Recently, there is provided an electric comic book that is delivered to a user via a communication network such as the Internet so that a user is allowed to enjoy the electric comic book displayed on a screen as well as a real comic book.

Heretofore, in such an electric comic book, there is provided a technique to change a display order or a representation method of display contents of speech balloons in each of which a speech is displayed (JP-A 2002-259111 (KOKAI): patent document 1).

The patent document 1 described above disclose that contents of the speech balloons are merely changed without consideration to protection of originality for the electric comic book.

A large amount of comic books or comic magazines are issued every day. In the case where translated comic books are created for such a large amount of comic books or comic magazines are translated, a processing load for translation of the comic books or comic magazines to create the translated comic books or translated comic magazines would increase. Thus, there has been a problem that the translated comic books or comic magazines cannot be created speedily.

### SUMMARY OF THE INVENTION

One aspect of the present invention is directed to an electric comic book delivering server for delivering an electric comic book to a client terminal via a communication network. In this case, each of the server and the client terminal is connected to the communication network. The server of the present invention includes an original electric comic-book database for storing original electric comic book data indicating an original electric comic book obtained by computerizing an original comic book, the original electric comic book being constituted from at least one cartoon sheet. The server also includes a mask data database for storing mask data indicating a mask sheet on which a mask color is drawn for masking character information of each cartoon sheet of the original electric comic book, the mask sheet being to be displayed in a mask layer above an original electric comic book layer for displaying each cartoon sheet of the original electric comic book. The server also includes a translation data database for storing translation data indicating a translation character description sheet in which at least one translation character is described, the at least one translation character being used in place of at least one original character indicated by character information of each cartoon sheet of the original electric comic book, the at least one original character being masked by the mask color drawn on the mask sheet, the translation character description sheet being to be displayed in a translation character layer above the mask layer. The server also includes a first payment demander for transmitting first payment demand information to the client terminal in response to a request to deliver a translated electric comic book from the client terminal, the first payment demand information being utilized to demand payment for consideration corresponding to at least one of the original electric comic book data, the mask data and the translation data. The server also includes a first response receiver for receiving a response to the payment demand of the consideration indicated by the first payment demand information from the client terminal. The server also includes a translated electric comic-book transmitter for transmitting the original electric comic book data, the mask data indicating the mask sheet to be displayed in the mask layer above the original electric comic book layer for displaying each cartoon sheet of the original electric comic book indicated by the original electric comic book data, and the translation data indicating the translation character description sheet to be displayed in the translation character layer above the mask layer for displaying the mask sheet indicated by the mask data, to the client terminal via the communication network in the case where the contents of the response received by the first response receiver indicate that the payment for the consideration is approved.

Another aspect of the present invention is directed to a system for delivering an electric comic book. The system is constructed from a client terminal connected to a communication network and an electric comic book delivering server that delivers the electric comic book to the client terminal via the communication network. In the system of the present invention, the server includes an original electric comic-book database for storing original electric comic book data indicating an original electric comic book obtained by computerizing an original comic book, the original electric comic book being constituted from at least one cartoon sheet. The server also includes a mask data database for storing mask data indicating a mask sheet on which a mask color is drawn for masking character information of each cartoon sheet of the original electric comic book, the mask sheet being to be displayed in a mask layer above an original electric comic book layer for displaying each cartoon sheet of the original electric comic book. The server also includes a translation data database for storing translation data indicating a translation character description sheet in which at least one translation character is described, the at least one translation character being used in place of at least one original character indicated by character information of each cartoon sheet of the original electric comic book, the at least one original character being masked by the mask color drawn on the mask sheet, the translation character description sheet being to be displayed in a translation character layer above the mask layer. The server also includes a first payment demander for transmitting first payment demand information to the client terminal in response to a request to deliver a translated electric comic book from the client terminal, the first payment demand information being utilized to demand payment for consideration corresponding to at least one of the original electric comic book data, the mask data and the translation data. The server also includes a first response receiver for receiving a response to the payment demand of the consideration indicated by the first payment demand information from the client terminal. The server also includes a translated electric comic-book transmitter for transmitting the original electric comic book data, the mask data indicating the mask sheet to be displayed in the mask layer above the original electric comic book layer for displaying each cartoon sheet of the original electric comic book indicated by the original electric comic book data, and the translation data indicating the translation character description sheet to be displayed in the translation character layer above the mask layer for displaying the mask sheet indicated by the mask data, to the client terminal via the communication network in the case where the contents of the response received by the first response receiver indicate that the payment for the consideration is approved.

Still another aspect of the present invention is directed to a method of delivering an electric comic book to a client terminal via a communication network using a terminal. The method of the present invention includes transmitting first payment demand information to the client terminal in response to a request to deliver a translated electric comic book from the client terminal, the first payment demand information being utilized to demand payment for consideration corresponding to at least one of original electric comic book data, mask data and translation data, original electric comic book data indicating an original electric comic book obtained by computerizing the original comic book, the original electric comic book being constituted from at least one cartoon sheet, mask data indicating a mask sheet on which a mask color is drawn for masking character information of each cartoon sheet of the original electric comic book, the mask sheet being to be displayed in a mask layer above an original electric comic book layer for displaying each cartoon sheet of the original electric comic book, translation data indicating a translation character description sheet in which at least one translation character is described, the at least one translation character being used in place of at least one original character indicated by character information of each cartoon sheet of the original electric comic book, the at least one original character being masked by the mask color drawn on the mask sheet, the translation character description sheet being to be displayed in a translation character layer above the mask layer. The method also includes receiving a response to the payment demand of the consideration indicated by the first payment demand information from the client terminal. The method also includes transmitting the original electric comic book data, the mask data indicating the mask sheet to be displayed in the mask layer above the original electric comic book layer for displaying each cartoon sheet of the original electric comic book indicated by the original electric comic book data, and the translation data indicating the translation character description sheet to be displayed in the translation character layer above the mask layer for displaying the mask sheet indicated by the mask data, to the client terminal via the communication network in the case where the contents of the response received in the receiving the response to the payment demand of the consideration indicated by the first payment demand information, indicate that the payment for the consideration is approved.

### BRIEF DESCRIPTION OF THE SEVERAL VIEWS OF THE DRAWINGS

The above and other objects, features and advantages of the present invention will become apparent from the following description of the preferred embodiments with reference to the accompanying drawings, wherein:
FIG. 1 is a block diagram that shows an example of a configuration of an electric comic book delivering system according to an embodiment of the present invention;
FIG. 2 is a flowchart that shows an example of a process for registering mask data and translation data;
FIG. 3 is an explanatory drawing that shows an example of a state of original electric comic book data stored in an original electric comic book database;
FIG. 4 is an explanatory drawing that shows an example of a state of payment information stored in a payment approval information database;
FIG. 5 is an explanatory drawing that shows an example of an original comic book indicated by original electric comic book data;
FIG. 6A is an explanatory drawing that shows an example of creating a mask sheet;
FIG. 6B is an explanatory drawing that shows an example of creating a mask sheet;
FIG. 7A is an explanatory drawing that shows an example of a layer structure after creation of the mask sheet;
FIG. 7B is an explanatory drawing that shows an example of a layer structure after creation of the mask sheet;
FIG. 8A is an explanatory drawing that shows an example of creating a translation character description sheet;
FIG. 8B is an explanatory drawing that shows an example of creating a translation character description sheet;
FIG. 9A is an explanatory drawing that shows an example of a layer structure after creation of the translation character description sheet;
FIG. 9B is an explanatory drawing that shows an example of a layer structure after creation of the translation character description sheet;
FIG. 10 is an explanatory drawing that shows an example of a state of the mask data stored in a speech balloon mask data database;
FIG. 11 is an explanatory drawing that shows an example of a state of the translation data stored in a translation data database;
FIG. 12 is a flowchart that shows an example of a process for delivering translated electric comic book data;
FIG. 13 is a drawing that shows an example of a comic book translation ranking screen;
FIG. 14 is a flowchart that shows an example of a process for delivering original electric comic book data;
FIG. 15 is a flowchart that shows an example of a user payment information calculating process;
FIG. 16 is a drawing that shows an example of user payment information; and
FIG. 17 is a flowchart that shows an example of a process for registering translation data.

### DETAILED DESCRIPTION OF THE INVENTION

Preferred embodiments of an electric comic book delivering server, a system for delivering electric comic book and a method of delivering electric comic book according to the present invention will now be described with reference to the accompanying drawings.

### <First Embodiment>

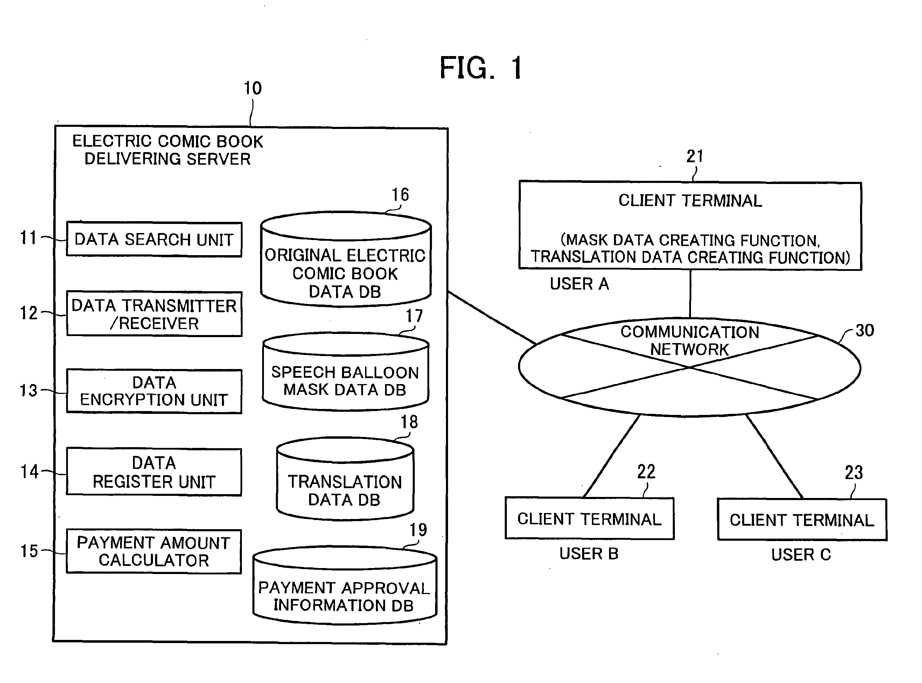

FIG. 1 is a block diagram that shows an example of an electric comic book delivering system according to a first embodiment of the present invention. As shown in FIG. 1, the electric comic book delivering system includes an electric comic book delivering server 10 and client terminals 21, 22, 23. The electric comic book delivering server 10 and the client terminals 21, 22, 23 are connected to a communication network 30 such as the Internet. Any number of client terminals may be included in the system.

The electric comic book delivering server 10 is constructed from an information processing apparatus such as a WWW server, and managed by a system administrator of the system. In this regard, the electric comic book delivering server 10 may be designed to work in a distributed manner like a peer-to-peer (P2P) server. Alternatively, the electric comic book delivering server 10 may be integrated into any client terminal (for example, the client terminal 21). The electric comic book delivering server 10 includes: a data search unit 11 for searching for various data; a data transmitter/receiver 12 for transmitting/receiving data; a data encryption unit 13 for encrypting data; a data register unit 14 for registering data into a database; a payment amount calculator 15 for calculating a amount of payment for each user; an original electric comic book database 16; a speech balloon mask data database 17; a translation data database 18; and a payment approval information database 19.

Each of the original electric comic book database 16, the speech balloon mask data database 17, and the translation data database 18 may be constructed from an information storage such as a database device.

The original electric comic book database 16 includes a storage medium for storing original electric comic book data. The term "original electric comic book data" means data indicating an original electric comic book obtained by computerizing various kinds of original comic books published in independent books and comic magazines. The original electric comic book is constituted from at least one cartoon sheet.

The speech balloon mask data database 17 includes a storage medium for storing speech balloon mask data. The term "speech balloon mask data" means data indicating mask sheets for masking speech balloon portions in each of which a speech or dialogue in a comic book is described. In this regard, the speech balloon mask data is character description portion mask data indicating mask sheets for masking not only the speech balloon portions but also other portions in which characters of the comic book are described (hereinafter, referred to simply as "mask data").

The translation data database 18 includes a storage medium for storing translation data. The term "translation data" means data indicating translation sheets in which speeches described with original language of the original comic book are translated to another language.

The payment approval information database 19 includes a storage medium for storing an event of payment approval information indicating that payment from a client terminal is approved. The term "payment approval information" means data indicating payment for original electric comic book data (or mask data, or translation data) from a client terminal (for example, ¥500). Further, in the case where the contents of a response indicate that payment for consideration is approved, information on the payment of the consideration is to be stored in the payment approval information database 19.

Each of the client terminals 21, 22, 23 is constructed from an information processing apparatus such as a personal computer or a mobile information terminal. In the present embodiment, each of the client terminals 21, 22, 23 has a mask data creating function and a translated data creating function (will be described later). Further, the client terminal 21 is operated by a user A, the client terminal 22 is operated by a user B, and the client terminal 23 is operated by a user C.

The mask data creating function includes a mask sheet displaying function, a mask sheet creating function (mask drawing function) and a mask data accepting function. The mask sheet displaying function causes a client terminal to display an original comic book in an original electric comic book layer as a lowermost layer. The original comic book is indicated by original electric comic book data received from the electric comic book delivering server 10. The mask sheet displaying function also causes the client terminal to display a mask sheet in a mask layer as an intermediate layer above the original electric comic book layer. The mask sheet creating function causes the client terminal to accept a drawing operation to draw a mask color at a predetermined position on the mask sheet by a user in order to mask character information of the original electric comic book displayed through the mask sheet. The mask data accepting function causes to the client terminal to accept a register request to register the mask data indicating the mask sheet on which the mask color is drawn. In this case, the mask drawing function allows the user to draw the mask color at a desired position with a desired shape/dimension on the mask sheet.

The translation data creating function includes a translation character description sheet displaying function, a translation character description sheet creating function (translation character describing function) and a translation data accepting function. The translation character description sheet displaying function causes a client terminal to display a translation character description sheet in a translation character layer as an uppermost layer above the mask layer. The translation character description sheet creating function causes the client terminal to accept at least one translation character described at a predetermined position on the translation character description sheet. The at least one translation character is used in place of at least one original character indicated by character information of the original electric comic book. The character information is masked by the mask color drawn on the mask sheet that is displayed through the translation character description sheet. The translation data accepting function causes the client terminal to accept a register request to register translation data indicating the translation character description sheet on which the at least one translation character is described. In this case, the translation character description function allows the user to describe the at least one translation character at a desired position with a desired shape/dimension on the translation character description sheet. Further, an image format such as a Joint Photographic Experts Group (JPEG) and a Graphics Interchange Format (GIF), or a property information format for storing a font, a position, a size and character string contents may be applied to a format of the translation character layer.

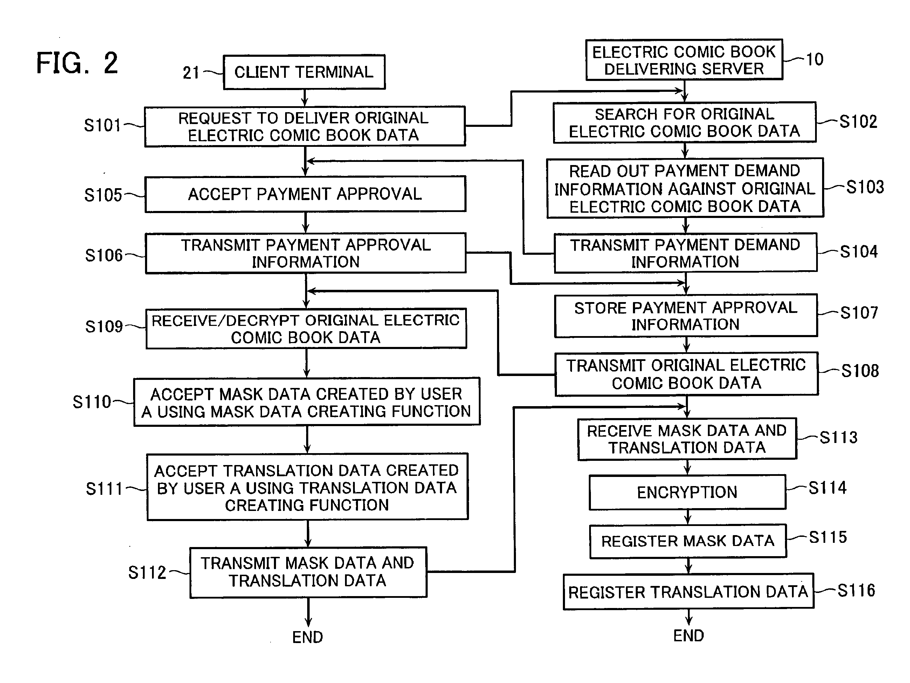

Next, a register process of mask data and translation data in the electric comic book delivering system will now be described. FIG. 2 is a flowchart that shows an example of the register process of mask data and translation data. Here, an example in which mask data and translation data corresponding to original electric comic book data are created in the client terminal 21, and the mask data and the translation data thus created are registered into the electric comic book delivering server 10 will be explained. In this case, the original electric comic book data indicates an original electric comic book X.

The client terminal 21 first accesses the electric comic book delivering server 10 in accordance with an operation by the user A, and requests to deliver the original electric comic book data indicating the original electric comic book X (Step S101). More specifically, the user A accesses a URL of an electric comic book delivering site set up by the electric comic book delivering server 10, and selects the original electric comic book X on an original electric comic book selection screen for selection of the desired original electric comic book data, whereby the user A requests the electric comic book delivering server 10 to deliver the original electric comic book data indicating the original electric comic book X.

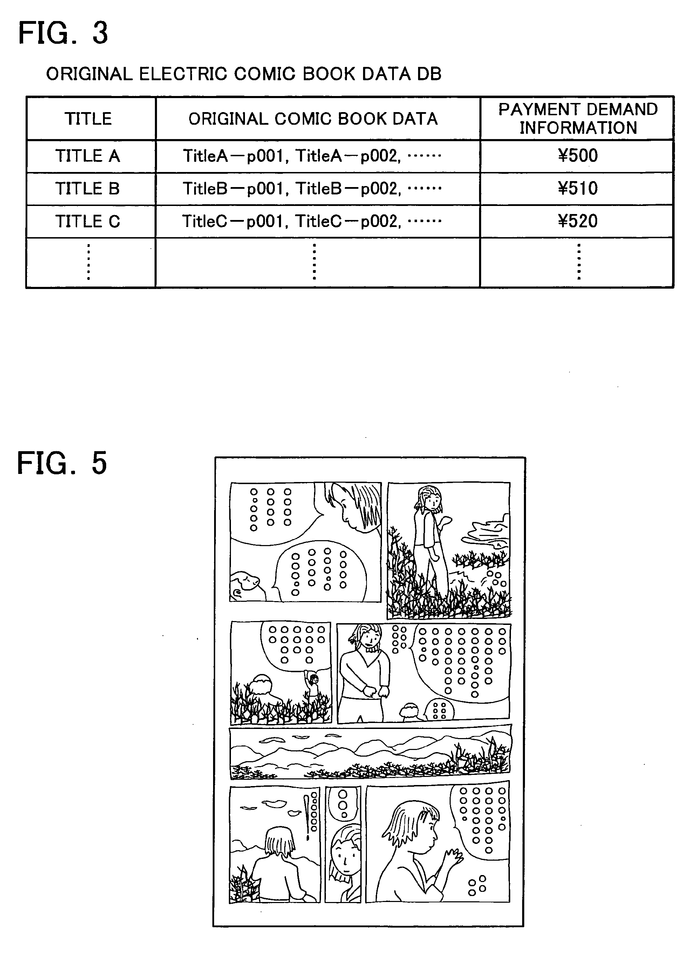

In response to the request to deliver the original electric comic book data, the data search unit 11 searches for the original electric comic book data indicating the requested original electric comic book X from a plurality of original electric comic book data stored in the original electric comic book database 16 (Step S102). Original electric comic book data corresponding to a plurality of titles as shown in FIG. 3 are stored in the original electric comic book database 16. As shown in FIG. 3, the original electric comic book data respectively corresponding to the titles are stored in the original electric comic book database 16 so as to be divided into units of page data each corresponding to a cartoon sheet. Further, in the original electric comic book data database 16, payment demand information corresponding to the original electric comic book data (for example, ¥500 per one transmission thereof) is stored. In this regard, the payment demand information on original electric comic book data is determined by an administrator or the like of the electric comic book delivering server 10. The data transmitter/receiver 12 then reads out payment demand information on the searched original electric comic book data (Step S103), and transmits the read out payment demand information to the client terminal 21 via the communication network 30 (Step S104).

Subsequently, the client terminal 21 accepts an input from the user whether the payment is to be approved or not on the basis of the received payment demand information (Step S105). Here, in the case where the input of payment approval information for approving the payment is accepted, the client terminal 21 transmits the payment approval information to the electric comic book delivering server 10 via the communication network 30 (Step S106).

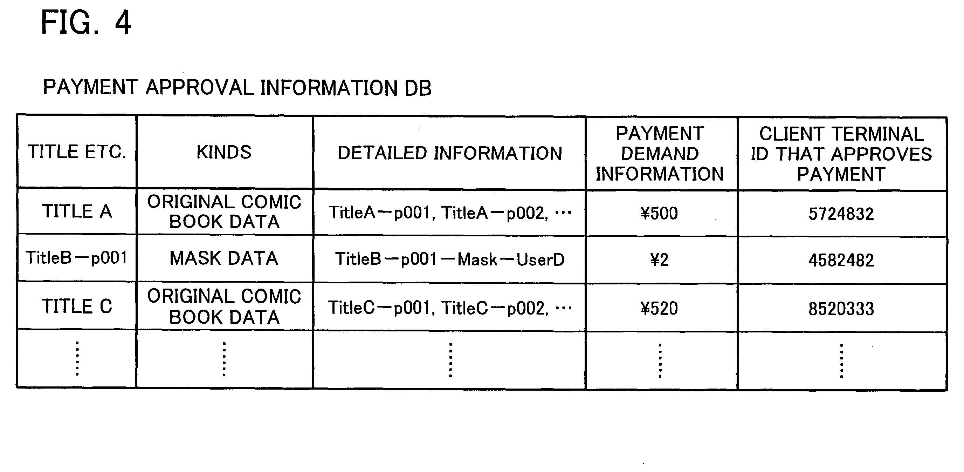

Subsequently, the data transmitter/receiver 12 in the electric comic book delivering server 10 stores the received payment approval information in the payment approval information database 19 (Step S107). In the payment approval information database 19, for example, as shown in FIG. 4, a title name and the like of the original comic book whose payment is approved (including a name of the corresponding original comic book data, the kinds of the data (for example, original comic book data, mask data, translation data), detailed information on the data (for example, a creator, the number of pages), payment demand information (for example, ¥500, ¥2), a user ID of the client terminal that transmits payment approval information, and the like are stored.

Subsequently, the data transmitter/receiver 12 transmits the searched original electric comic book data to the client terminal 21 via the communication network 30 (Step S108).

The client terminal 21 receives the original electric comic book data and decrypts the original electric comic book data (Step S109). In the present embodiment, the original electric comic book data stored in the original electric comic book database 16 has been encrypted on the basis of an encryption key for the original electric comic book data. Further, an decryption key for decrypting the encrypted original comic book data may be delivered at the same time of or before delivering the original electric comic book data.

Subsequently, the client terminal 21 displays the original electric comic book X (specifically, an operation target page of the original electric comic book X) indicated by the decrypted original electric comic book data on its own display device. Here, as shown in FIG. 5, for example, speeches of speech balloon portions and at least one character of a portion other than the speech balloon portions for indicating a sound effect are described in a first language, such as Japanese, on the original comic book X indicated by the original electric comic book data.

When the original electric comic book X indicated by the original electric comic book data is displayed in the original electric comic book layer as the lowermost layer, the client terminal 21 displays a mask sheet in the mask layer as the intermediate layer above the original electric comic book layer. The client terminal 21 accepts a drawing operation by the user A to draw a mask color (for example, a background color within the speech balloon portions) at a desired position on the mask sheet for masking character information of the original electric comic book displayed through the mask sheet. The client terminal 21 then accepts a request to register mask data indicating the mask sheet on which the mask color is drawn (Step S110). In this case, the mask color for masking the character information of the original electric comic book may be selected by the user A from a palette displayed on the display device, for example.

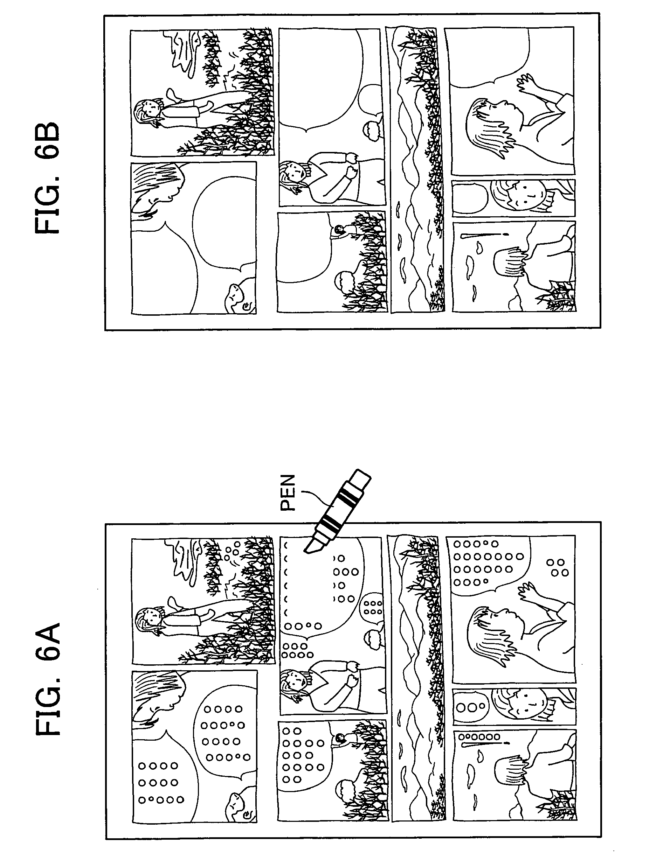

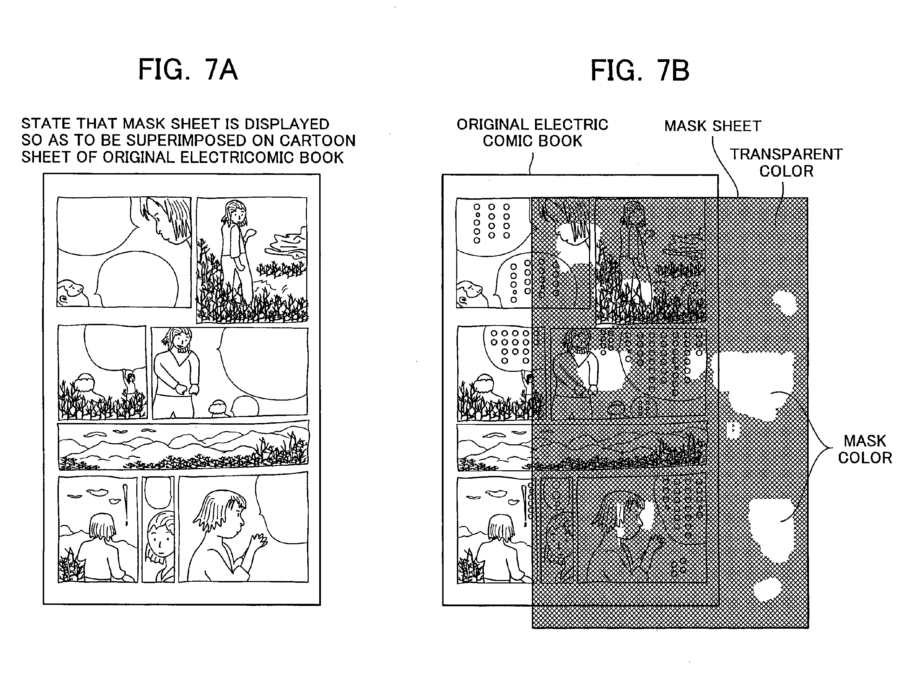

In the present embodiment, the user A may manipulate an input device such as a keyboard and a mouse with which the client terminal 21 is provided so as to delete the character displayed on the original electric comic book X indicated by the original electric comic book data on the basis of the mask drawing function. More specifically, in a state where the original electric comic book X is displayed in the original electric comic layer and the mask sheet is displayed in the mask layer, the user A manipulates the pen P displayed on the display device to draw the mask color on the mask sheet so as to delete characters described on the original electric comic book X in a first language (in this example, each of the characters is expressed as a circle) as shown in FIG. 6A. When all of the characters in the first language are masked as shown in FIG. 6B, the operation by the user A is completed. Thus, all of the characters in the first language are removed from the original electric comic book X in physical appearance as shown in FIG. 7A. However, in view of the data, the original electric comic book X displayed in the original electric comic book layer still remain unchanged, and the mask sheet on which the mask color is drawn is just created as shown in FIG. 7B. The mask color is drawn in portions on the mask sheet corresponding to portions in which the characters are described in the first language on the original electric comic book.

In response to acceptance of the mask data, the client terminal 21 displays the translation character description sheet in the translation character layer further above the mask layer for displaying the created mask sheet to accept description by the user A for describing characters in a second language (such as English) at a desired position on the translation character description sheet in place of the characters in the first language masked by the mask color drawn on the mask sheet displayed through the translation character description sheet. The client terminal 21 then accepts a request to register the translation data indicating the translation character description sheet including characters described in the second language (Step S111).

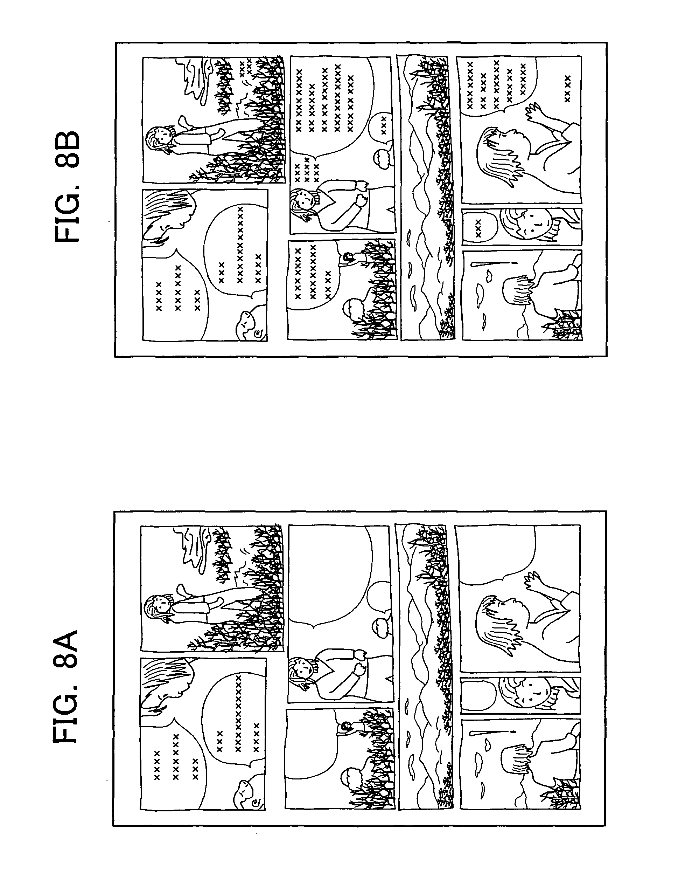

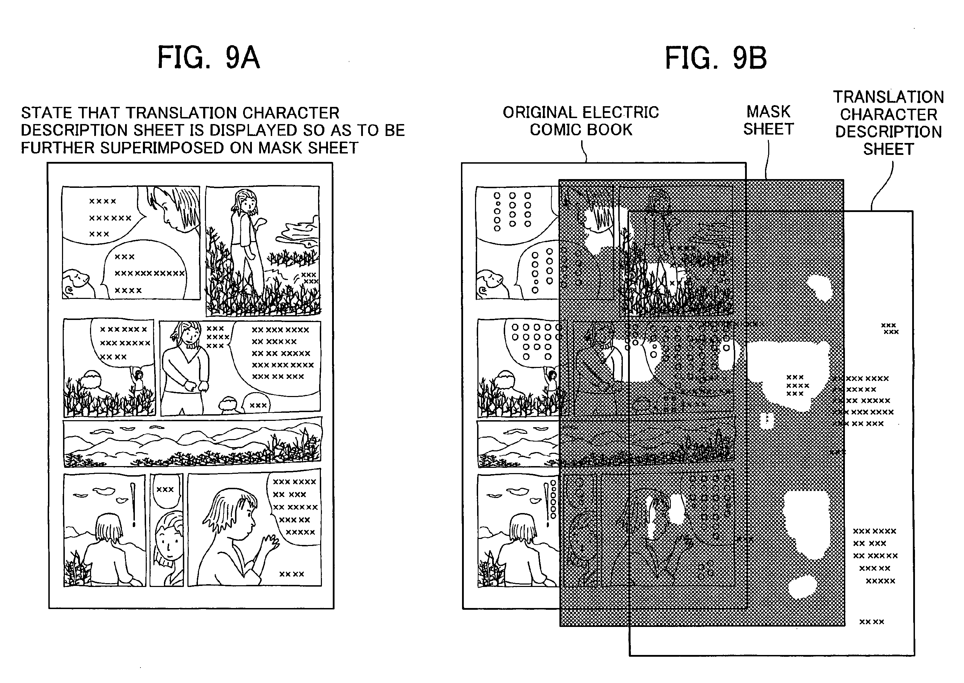

In the present embodiment, the user A manipulates the input device such as the keyboard and the mouse with which the client terminal is provided so as to describe the characters in the second language on the portions masked on the mask sheet that is displayed above the original electric comic book X indicated by the original electric comic book data on the basis of the translation character description function. More specifically, in a state where the original electric comic book X, the mask sheet and the translation character description sheet are respectively displayed in the original comic book layer, the mask layer and the translation character layer, the user A describes characters in the second language (in this example, each of the characters is expressed as a cross) as shown in FIG. 8A. When all of the characters in the second language are described on the translation character sheet, the operation is completed as shown in FIG. 8B. Thus, all of the characters of the original electric comic book X in the first language are translated into the character in the second language in physical appearance as shown in FIG. 9A. However, in view of the data, the original electric comic book X displayed in the original electric comic book layer still remains unchanged. The mask sheet is displayed above the original electric comic book X and the translation character description sheet is created as shown in FIG. 9B. The mask color is drawn in portions on the mask sheet corresponding to portions in which the characters are described in the first language on the original electric comic book. The characters in the second language are described in portions on the translation character description sheet corresponding to the portions in which the characters are described in the first language on the original electric comic book.

Subsequently, the client terminal 21 associates the accepted mask data and translation data with the corresponding original electric comic book X (such as a code designated to the original electric comic book X) to transmit the accepted mask data and translation data to the electric comic book delivering server 10 (Step S112).

When the electric comic book delivering server 10 receives the mask data and the translation data (Step S113), the data encryption unit 13 in the electric comic book delivering server 10 encrypts the mask data and the translation data thus received (Step S114). The data register unit 14 in the electric comic book delivering server 10 registers the encrypted mask data into the speech balloon mask data database 17 (Step S115) and registers the encrypted translation data into the translation data database 18 (Step S116).

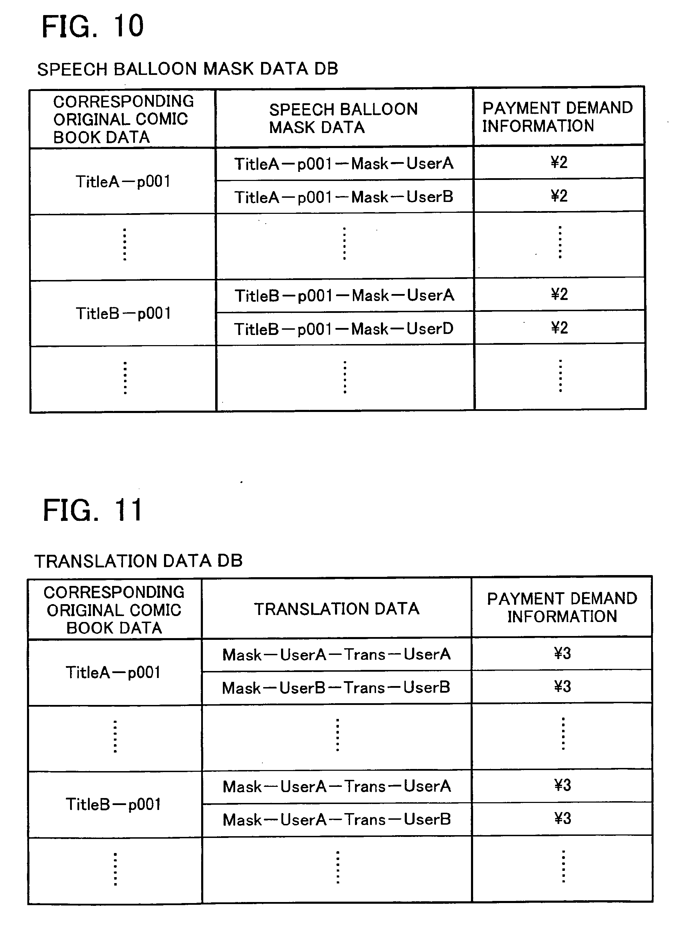

FIG. 10 is an explanatory drawing that shows an example of a state of the mask data stored in the speech balloon mask data database 17. As shown in FIG. 10, the mask data is registered in the speech balloon mask data database 17 in units of pages so that the corresponding original electric comic book data can be identified. The mask data are stored in the mask data database 17 so as to be encrypted by an encryption key for the mask data. In the example as shown in FIG. 10, mask data created by the user A and mask data created by the user B are stored in the mask data database 17 so as to correspond to a first page of the original electric comic book data having a title A (such as a title name). Mask data created by the user A and mask data created by the user D are also stored in the mask data database 17 so as to correspond to a first page of the original electric comic book data having a title B. Further, in the mask data database 17, payment demand information corresponding to each of mask data (for example, ¥2 per one transmission thereof) is stored. In this regard, the payment demand information on mask data is determined by the administrator or the like of the electric comic book delivering server 10.

FIG. 11 is an explanatory drawing that shows an example of a state of the translation data stored in the translation data database 18. As shown in FIG. 11, the translation data is registered in the translation data database 18 in units of pages so that the corresponding mask data and the corresponding original electric comic book data can be identified. The translation data are stored in the translation data database 18 so as to be encrypted by an encryption key for the translation data. In the example shown in FIG. 11, translation data created by the user A corresponding to the mask data created by the user A, and translation data created by the user B corresponding to the mask data created by the user B are stored in the translation data database 18 so as to correspond to a first page of the original electric comic book data having a title A. Translation data created by the user A corresponding to the mask data created by the user A and translation data created by the user B corresponding to the mask data created by the user B are also stored in the translation data database 18 so as to correspond to a first page of the original electric comic book data having a title B. Further, in the translation data database 18, payment demand information corresponding to each of original electric comic book data (for example, ¥3 per one transmission thereof) is stored. In this regard, the payment demand information on translation data is determined by the administrator or the like of the electric comic book delivering server 10.

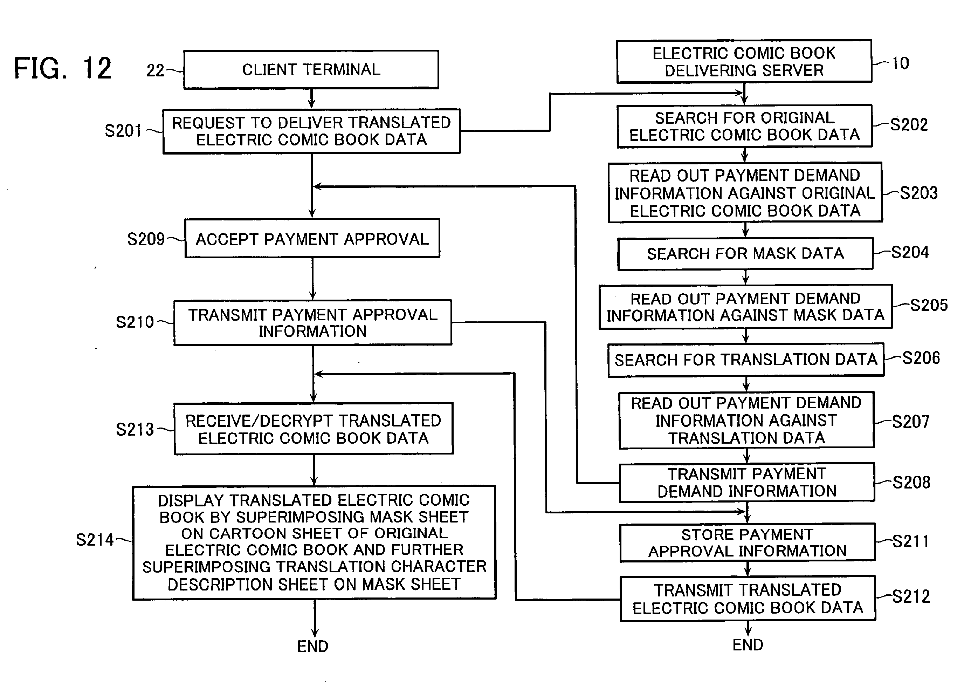

Next, a process for delivering translated electric comic book data in the electric comic book delivering system will be described. FIG. 12 is a flowchart that shows an example of the process for delivering translated electric comic book data. Here, the case where translated electric comic book data indicating translated electric comic book Y translated in the second language from the original electric comic book X are delivered in response to a request from the client terminal 22 will be explained as an example.

The client terminal 22 first accesses the electric comic book delivering server 10 in accordance with an operation by the user B, and requests the electric comic book delivering server 10 to deliver translated electric comic book data indicating a translated electric comic book Y (Step S201). More specifically, the user B accesses a URL of an electric comic book delivering site set up by the electric comic book delivering server 10, and selects the translated electric comic book Y on a translated electric comic book selection screen for selection of the translated electric comic book data to be acquired, whereby the user B requests the electric comic book delivering server 10 to deliver the translated comic book data indicating the translated electric comic book Y.

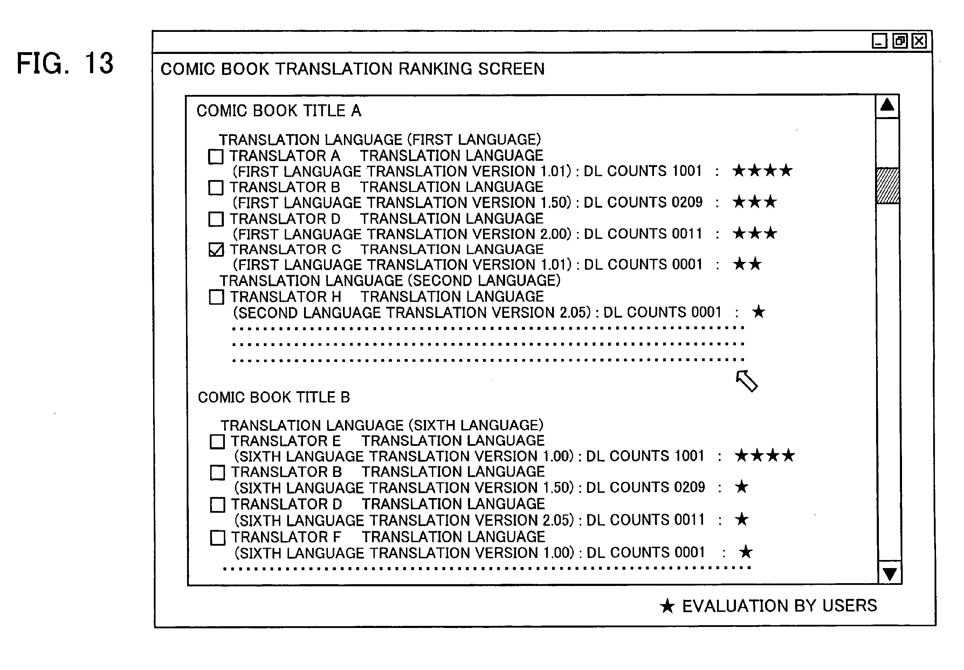

Here, for example, on the translated electric comic book selection screen, a comic book translation ranking screen in which translations are ranked as shown in FIG. 13 and the like are displayed as a part thereof. Namely, the data transmitter/receiver 12 in the electric comic book delivering server 10 transmits the comic book translation ranking screen to the client terminal 22. As shown in FIG. 13, on the comic book translation ranking screen, comic book tiles, translation languages, translators, download counts, evaluation by users and the like are displayed. Further, check boxes for respective translators are provided at the left side of the comic book translation ranking screen. In the case where a check box becomes a selected state by an operation of the client terminal 22 by the user B, the data transmitter/receiver 12 determines that the translation data to become the selected state is a translation of the electric comic book Y. In this regard, an evaluation button is provided on a browsing screen of an electric comic book, and the evaluation by users is executed on the basis of the number of presses of the evaluation button.

FIG. 12 is referred to again. Subsequently, in response to the request to deliver the translated electric comic book data, the data search unit 11 searches for the original electric comic book data indicating the original electric comic book X to be displayed in the lowermost layer of the requested translated electric comic book Y from original electric comic book data corresponding to a plurality of original electric comic books stored in the original electric comic book database 16 (Step S202). With this search, the data search unit 11 reads out the payment demand information corresponding to the searched original electric comic book data (Step S203). The data search unit 11 also searches for mask data indicating a mask sheet to be displayed in the intermediate layer of the translated electric comic book Y from mask data corresponding to a plurality of original electric comic books stored in the speech balloon mask data database 17 (Step S204). With this search, the data search unit 11 reads out the payment demand information corresponding to the searched mask data (Step S205). Moreover, the data search unit 11 searches for translation data indicating a translation character description sheet to be displayed in the uppermost layer of the translated electric comic book Y from a plurality of translation data corresponding to a plurality of original electric comic books stored in the translation data database 18 (Step S206). With this search, the data search unit 11 reads out the payment demand information corresponding to the searched translation data (Step S207). The data transmitter/receiver 12 transmits the payment demand information corresponding to each of the original electric comic book data, the mask data and the translation data to the client terminal 22 via the communication network 30 (Step S208).

Subsequently, the client terminal 22 accepts an input of whether the payment is approved or not on the basis of the received payment demand information (Step S209). Here, in response to the input of the payment approval information that the payment is approved, the client terminal 22 transmits the payment approval information to the electric comic book delivering server 10 via the communication network 30 (Step S210).

Subsequently, the data transmitter/receiver 12 in the electric comic book delivering server 10 receives the payment approval information to store it in the payment approval information database 19 (Step S211). The data transmitter/receiver 12 then transmits the translated electric comic book data constituted from the searched original electric comic book data, the searched mask data and the searched translation data to the client terminal 22 via the communication network 30 (Step S212). In this regard, the mask data stored in the speech balloon mask data database 17 and the translation data stored in the translation data database 18 may be registered in the databases 17, 18 by obtaining them from a client terminal, or may be registered in the databases 17, 18by creating them by the system administrator.

The client terminal 22 receives the translated electric comic book and respectively decrypts the original electric comic book data, the mask data and the translation data constituting the translated electric comic book data using separate decryption keys (Step S213).

The client terminal 22 then displays the original electric comic book X indicated by the decrypted original electric comic book data in an original electric comic book layer, displays the mask sheet indicated by the decrypted mask data in a mask layer above the original electric comic book layer, and further displays the translation character description sheet indicated by the decrypted translation data in the translation layer above the mask sheet. Thus, the client terminal 22 displays the translated electric comic book Y on a display device with which the client terminal 22 is provided, as shown in FIG. 9A (Step S214).

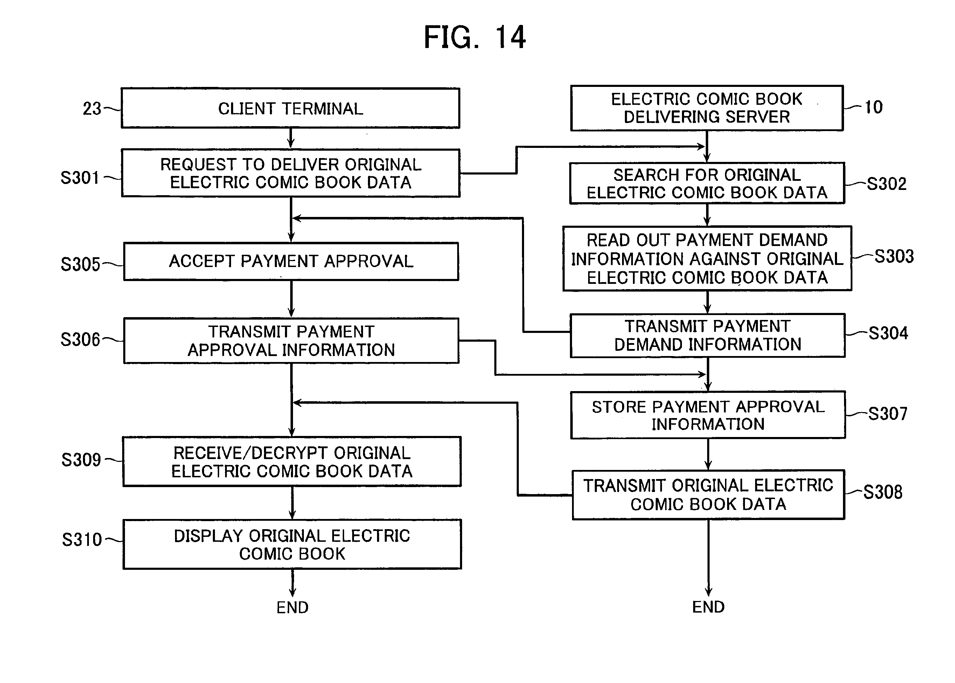

Next, a process for delivering the original electric comic book in the electric comic book delivering system will be described. FIG. 14 is a flowchart that shows an example of the process for delivering the original electric comic book. Here, the case where original electric comic book data indicating the original electric comic book X is delivered in response to a request from the client terminal 23 will be explained as an example.

The client terminal 23 first accesses the electric comic book delivering server 10 in accordance with an operation by the user C, and requests the electric comic book delivering server 10 to deliver an original electric comic book X (Step S301). More specifically, the user C accesses a URL of an electric comic book delivering site set up by the electric comic book delivering server 10, and selects the original electric comic book X on an original electric comic book select screen for selection of the original electric comic book data to be acquired, whereby the user C requests the electric comic book delivering server 10 to deliver the original comic book data indicating the original electric comic book X.

In response to the request to deliver the original electric comic book data, the data search unit 11 searches for the original electric comic book data indicating the requested original electric comic book X from original electric comic book data corresponding to a plurality of original electric comic books stored in the original electric comic book database 16 (Step S302). With this search, the data search unit 11 reads out the payment demand information corresponding to the searched original electric comic book data (Step S303). The data transmitter/receiver 12 then transmits the payment demand information corresponding to the read out original electric comic book data to the client terminal 23 via the communication network 30 (Step S304).

Subsequently, the client terminal 23 accepts an input of whether the payment is approved or not on the basis of the received payment demand information (Step S305). Here, in response to the input of the payment approval information that the payment is approved, the client terminal 23 transmits the payment approval information to the electric comic book delivering server 10 via the communication network 30 (Step S306).

Subsequently, the data transmitter/receiver 12 in the electric comic book delivering server 10 stores the received payment approval information in the payment approval information database 19 (Step S307). The data transmitter/receiver 12 then transmits the searched original electric comic book data to the client terminal 23 via the communication network 30 (Step S308).

The client terminal 23 receives the original electric comic book data and decrypts the original electric comic data using a decryption key separately obtained (Step S309). The client terminal 23 may obtain the original electric comic book data and the decryption key separately. The client terminal 23 then displays the original electric comic book X indicated by the decrypted original electric comic book data on a display device with which the client terminal 23 is provided, as shown in FIG. 5 (Step S310).

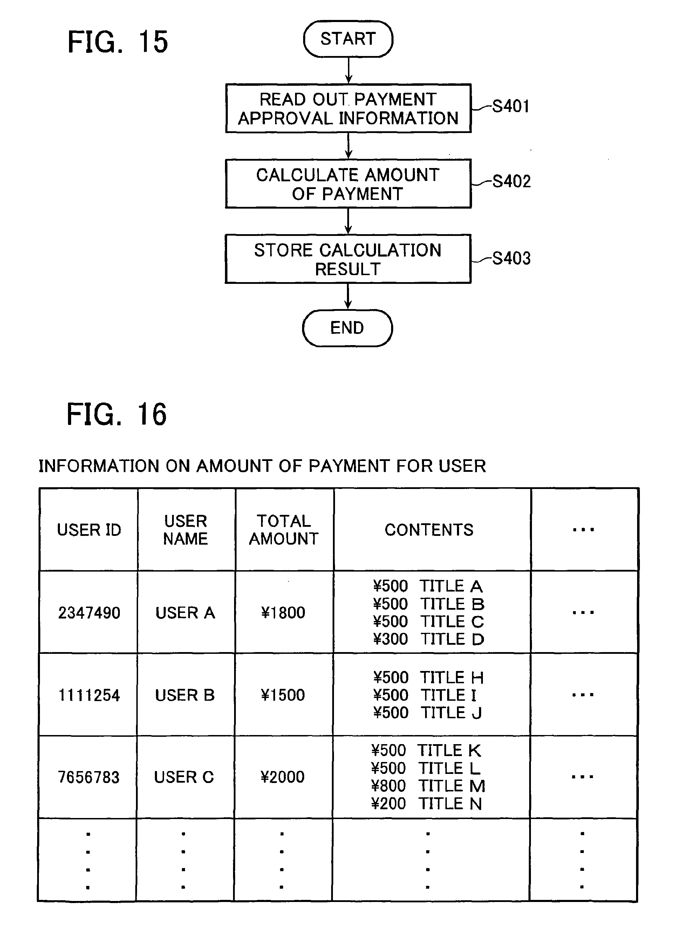

Next, a user payment information calculating process for calculating an amount of payment for each user in the electric comic book delivering server 10 will now be described. FIG. 15 is a flowchart that shows an example of a user payment information calculating process. The data search unit 11 first reads out the payment approval information corresponding to each user from the payment approval information database 19 (Step S401). Subsequently, the payment amount calculator 15 calculates information on the amount of payment for a user, which indicates an amount of payment for each user (Step S402). In this case, the information on the amount of payment for a user is information on the payment for consideration. The data register unit 14 stores the information on the amount of payment for a user with the payment approval information database 19 (Step S403).

Here, as shown in FIG. 16, the information on the amount of payment for a user described above includes the user ID uniquely identifying the user, the user name, the total amount of payment for every user (for example, ¥1800), the contents of the total amount (for example, ¥500 for the title A, ¥500 for the title B, ¥500 for the title C, and ¥300 for the title D). The electric comic book delivering server 10 can automatically make up account on the basis of such information on the amount of payment for a user.

As described above, according to the first embodiment of the present invention, the mask sheet is displayed in the mask layer above the original electric comic book so as to be superimposed on the original electric comic book. Further, the translation character description sheet is displayed in the translation layer above the mask sheet so as to be superimposed on the mask sheet. The translated electric comic book is thus displayed. Since the mask sheet and the translation character description sheet are newly created, the translated electric comic book can be created without changing the original electric comic book. Therefore, the translated electric comic book can be created while the originality of the original electric comic book is secured. Further, since the mask sheet and the translation character description sheet are created by a user side, a processing load of the server to obtain the translated electric comic book can be reduced. In addition, since the translation data can be obtained from a large number of general users, it can be expected that the mask sheet and the translation sheet are obtained for a short period of time after issuance of each of original electric comic books. Therefore, the translated electric comic book data can be delivered promptly. Moreover, in the case where the reward is paid to the translator whenever delivering the translated electric comic book, it can be expected that the mask sheet and the translation sheet are obtained for a very short period of time, and this makes it possible to deliver the translated electric comic book data more promptly.

Further, according to the first embodiment of the present invention, the mask sheet and the translation character description sheet are created at the client terminal 21 and uploaded to the electric comic book delivering server 10. Thus, the mask data and translation data for creating the translated comic book can be created and transmitted to the electric comic book delivering server 10 while the originality of the original electric comic book is secured. Thus, the processing load of the electric comic book delivering server 10 to obtain the translated electric comic book can be reduced. The electric comic book delivering server can deliver the translated electric comic book promptly.

Moreover, according to the first embodiment of the present invention, in the electric comic book delivering server 10, the consideration is paid from the client terminal in accordance with the transmitted original electric comic book data, the mask data and/or the translation data. Namely, a translator can transmit his or her translation data to the electric comic book delivering server 10 easily, and can obtain a profit in response to payment based on delivering of the translation data from the electric comic book delivering server 10. Therefore, the electric comic book delivering server 10 can collect various translation data actively without finding a suitable translator. Further, using the comic book translation ranking screen as shown in FIG. 13, it is possible to rank excellent translation data on the basis of the evaluation by users and the download counts. Thus, it is possible to find an excellent translation (or translator) readily.

### <Second Embodiment>

In the first embodiment described above, although the mask sheet and the translation character description sheet are created at the client terminal 21 and uploaded to the electric comic book delivering server 10, only the translation character description sheet may be created using already available mask sheet.

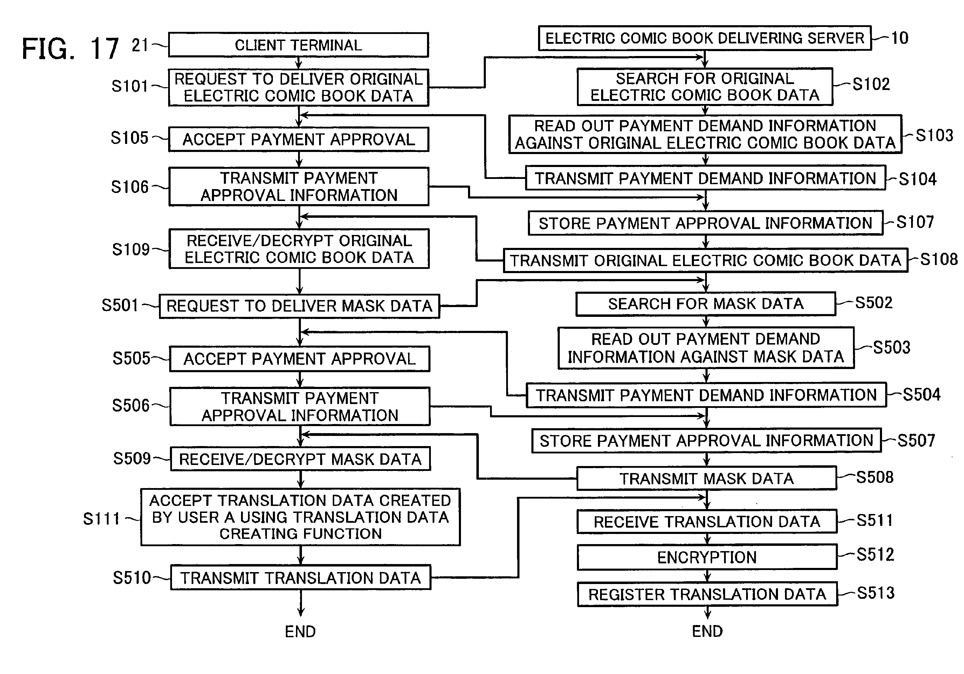

FIG. 17 is a flowchart that shows an example of process for registering translation data. Here, the case where translation data corresponding to original electric comic book data indicating an original electric comic book X are created at the client terminal 21 using existing mask data corresponding to the original electric comic book data indicating the original electric comic book X, and the created translation data are registered to the electric comic book delivering server 10 will be explained as an example. In this regard, step s for executing the same processes of the first embodiment are designated to the same reference numerals (step numbers), and the explanation of the processes is omitted.

After executing the processes of Step S101 to S109, the client terminal 21 accesses a URL of a mask data delivering site set up by the electrical comic book delivering server 10, and selects the mask data corresponding to the original electric comic book X on a mask data selection screen for selection of the mask data to be acquired to request the electric comic book delivering server 10 to deliver the mask data (Step S501).

In response to the request to deliver the mask data, the data search unit 11 searches for the mask data corresponding to the requested original electric comic book X from a plurality of mask data stored in the speech balloon mask data database 17 (Step S502). With this search, the data search unit 11 reads out the payment demand information corresponding to the searched mask data (Step S503). The data transmitter/receiver 12 then transmits the payment demand information corresponding to the read out original electric comic book data to the client terminal 21 via the communication network 30 (Step S504).

Subsequently, the client terminal 21 accepts an input of whether the payment is approved or not on the basis of the received payment demand information (Step S505). Here, in response to the input of the payment approval information that the payment is approved, the client terminal 21 transmits the payment approval information to the electric comic book delivering server 10 via the communication network 30 (Step S506).

Subsequently, the data transmitter/receiver 12 in the electric comic book delivering server 10 stores the received payment approval information in the payment approval information database 19 (Step S507). The data transmitter/receiver 12 then transmits the searched mask data to the client terminal 21 via the communication network 30 (Step S508).

The client terminal 21 receives the mask data and decrypts the mask data (Step S509). Subsequently, the client terminal 22 displays the original electric comic book X indicated by the original electric comic book data, displays the mask sheet indicated by the obtained mask data in the mask layer above the original electric comic book X, and displays the translation character description sheet in the translation character layer above the mask layer. The client terminal 21 accepts a request to register the translation data in the same manner as that at Step S111 described above.

Subsequently, the client terminal 21 associates the accepted translation data with the corresponding original electric comic book X and mask data (such as a code designated to the mask data) to transmit the accepted translation data to the electric comic book delivering server 10 (Step S510).

When the electric comic book delivering server 10 receives the translation data (Step S511), the data encryption unit 13 in the electric comic book delivering server 10 encrypts the translation data thus received (Step S512). The data register unit 14 in the electric comic book delivering server 10 registers the encrypted translation data into the translation data database 18 (Step S513).

Since the electric comic book delivering system is constructed as described above, there is no need for the user to create the mask sheet. Namely, the user may create only the translation character description sheet. Thus, it is possible to reduce an operation load of the user.

Although it is not particularly referred to in the first and second embodiments described above, various processes described above are executed in accordance with processing programs (such as a network connection managing program) installed to the respective elements.

In this regard, in the first and second embodiments described above, the original electric comic book data, the mask data and the translation data are respectively encrypted using separate encryption keys, leakage of information and illegal copy can be prevented.

Further, in the first and second embodiment described above, the translated electric comic book data including three data for the three layers are transmitted to the client terminal, and the client terminal displays the translated electric comic book on the display device by superimposing images of the three layers (including the original electric comic book, the mask sheet and the translation character description sheet) in a predetermined order. However, the electric comic book delivering server 10 may execute a superposing process of the images of three layers to transmit a viewer screen of the superimposed translated electric comic book to the client terminal. The client terminal may receive the viewer screen and display the viewer screen of the superimposed translated electric comic book.

In this regard, although it is not particularly referred to in the first and second embodiments described above, the mask sheet and the translation character description sheet as described above may be created by transferring only an operation screen to the client terminal and causing the user of the client terminal to operate the operation screen using Graphical User Interface (GUI) environment of an X window system or a Window Terminal Server (WTS).

Further, although all of the original electric comic book data, the mask data and the translation data are encrypted in the first and second embodiment described above, only the original electric comic book data may be encrypted or all of the original electric comic book data, the mask data and the translation data may not be encrypted.

Moreover, although the payment is executed every time at least one of the original electric comic book data, the mask data, and the translation data are transmitted, the payment may be executed for only the transmission of the original electric comic book data.

## Claims

1. An electric comic book delivering server for delivering an electric comic book to a client terminal via a communication network, each of the server and the client terminal being connected to the communication network, the server comprising:
an original electric comic-book database for storing original electric comic book data indicating an original electric comic book obtained by computerizing an original comic book, the original electric comic book being constituted from at least one cartoon sheet;
a mask data database for storing mask data indicating a mask sheet on which a mask color is drawn for masking character information of each cartoon sheet of the original electric comic book, the mask sheet being to be displayed in a mask layer above an original electric comic book layer for displaying each cartoon sheet of the original electric comic book;
a translation data database for storing translation data indicating a translation character description sheet in which at least one translation character is described, the at least one translation character being used in place of at least one original character indicated by character information of each cartoon sheet of the original electric comic book, the at least one original character being masked by the mask color drawn on the mask sheet, the translation character description sheet being to be displayed in a translation character layer above the mask layer;
a first payment demander for transmitting first payment demand information to the client terminal in response to a request to deliver a translated electric comic book from the client terminal, the first payment demand information being utilized to demand payment for consideration corresponding to at least one of the original electric comic book data, the mask data and the translation data;
a first response receiver for receiving a response to the payment demand of the consideration indicated by the first payment demand information from the client terminal; and
a translated electric comic-book transmitter for transmitting the original electric comic book data, the mask data indicating the mask sheet to be displayed in the mask layer above the original electric comic book layer for displaying each cartoon sheet of the original electric comic book indicated by the original electric comic book data, and the translation data indicating the translation character description sheet to be displayed in the translation character layer above the mask layer for displaying the mask sheet indicated by the mask data, to the client terminal via the communication network in the case
where the contents of the response received by the first response receiver indicate that the payment for the consideration is approved.

2. The server according to claim 1, wherein at least one of the original electric comic book data stored in the original electric comic-book database, the mask data stored in the mask data database and the translation data stored in the translation data database is encrypted on the basis of an encryption key.

3. The server according to claim 1, further comprising:
a translation data related information transmitter for transmitting information related to the translation data in response to a request from the client terminal, the information including at least one of evaluation of the translation data and the number of transmissions of the translation data.

4. The server according to claim 1, further comprising:
a payment information accumulator for accumulating information relating to the payment for the consideration in the case where the contents of the response received from the client terminal indicate that the payment for the consideration is approved.

5. The server according to claim 1, further comprising:
a second payment demander for transmitting second payment demand information to other client terminal in response to a request to deliver only the original electric comic book data from the other client terminal, the second payment demand information being utilized to demand payment for consideration corresponding to the original electric comic book data, the other client terminal being connected to the communication network;
a second response receiver for receiving a response to the payment demand of the consideration indicated by the second payment demand information from the other client terminal;
an electric comic-book transmitter for transmitting the original electric comic book data to the other client terminal via the communication network in the case where the contents of the response received by the second response receiver indicate that the payment for the consideration is approved;
a mask data receiver for receiving, from the other client terminal via the communication network, mask data created using a mask data creating function of the other client terminal, the created mask data indicating the mask sheet to be displayed in the mask layer above the original electric comic book layer for displaying each cartoon sheet of the original electric comic book transmitted by the electric comic-book transmitter;
a translation data receiver for receiving, from the other client terminal via the communication network, translation data created using a translation data creating function of the other client terminal, the created translation data indicating the translation character description sheet to be displayed in the translation character layer above the mask layer for displaying the mask sheet indicated by the mask data; and
a data register unit for respectively registering the mask data and the translation data thus received with the mask data database and the translation data database so as to be associated with the original electric comic book data transmitted by the electric comic-book transmitter.

6. The server according to claim 5, wherein at least one of the original electric comic book data stored in the original electric comic-book database, the mask data stored in the mask data database and the translation data stored in the translation data database is encrypted on the basis of an encryption key.

7. The server according to claim 5, further comprising:
a translation data related information transmitter for transmitting information related to the translation data in response to a request from the client terminal, the information including at least one of evaluation of the translation data and the number of transmissions of the translation data.

8. The server according to claim 5, further comprising:
a payment information accumulator for accumulating information relating to the payment for the consideration in the case where the contents of the response received from the client terminal indicate that the payment for the consideration is approved.

9. The server according to claim 1, further comprising:
a second payment demander for transmitting second payment demand information to other client terminal in response to a request to deliver only the original electric comic book data from the other client terminal, the second payment demand information being utilized to demand payment for consideration corresponding to the original electric comic book data, the other client terminal being connected to the communication network;
a second response receiver for receiving a response to the payment demand of the consideration indicated by the second payment demand information from the other client terminal;
an electric comic-book transmitter for transmitting the original electric comic book data to the other client terminal via the communication network in the case where the contents of the response received by the second response receiver indicate that the payment for the consideration is approved;
a third payment demander for transmitting third payment demand information to other client terminal in response to a request to deliver only the mask data from the other client terminal, the third payment demand information being utilized to demand payment for consideration corresponding to the mask data;
a third response receiver for receiving a response to the payment demand of the consideration indicated by the third payment demand information from the other client terminal;
a mask data transmitter for transmitting the mask data to the other client terminal via the communication network in the case where the contents of the response received by the third response receiver indicate that the payment for the consideration is approved;
a translation data receiver for receiving, from the other client terminal via the communication network, translation data created using a translation data creating function of the other client terminal, the created translation data indicating the translation character description sheet to be displayed in the translation character layer above the mask layer for displaying the mask sheet indicated by the mask data, the mask data being transmitted by the mask data transmitter; and
a data register unit for registering the received translation data with the translation data database so as to be associated with the original electric comic book data transmitted by the electric comic-book transmitter.

10. The server according to claim 9, wherein at least one of the original electric comic book data stored in the original electric comic-book database, the mask data stored in the mask data database and the translation data stored in the translation data database is encrypted on the basis of an encryption key.

11. The server according to claim 9, further comprising:
a translation data related information transmitter for transmitting information related to the translation data in response to a request from the client terminal, the information including at least one of evaluation of the translation data and the number of transmissions of the translation data.

12. The server according to claim 9, further comprising:
a payment information accumulator for accumulating information relating to the payment for the consideration in the case where the contents of the response received from the client terminal indicate that the payment for the consideration is approved.

13. A system for delivering an electric comic book, the system being constructed from a client terminal connected to a communication network and an electric comic book delivering server that delivers the electric comic book to the client terminal via the communication network, wherein the server comprises:
an original electric comic-book database for storing original electric comic book data indicating an original electric comic book obtained by computerizing an original comic book, the original electric comic book being constituted from at least one cartoon sheet;
a mask data database for storing mask data indicating a mask sheet on which a mask color is drawn for masking character information of each cartoon sheet of the original electric comic book, the mask sheet being to be displayed in a mask layer above an original electric comic book layer for displaying each cartoon sheet of the original electric comic book;
a translation data database for storing translation data indicating a translation character description sheet in which at least one translation character is described, the at least one translation character being used in place of at least one original character indicated by character information of each cartoon sheet of the original electric comic book, the at least one original character being masked by the mask color drawn on the mask sheet, the translation character description sheet being to be displayed in a translation character layer above the mask layer;
a first payment demander for transmitting first payment demand information to the client terminal in response to a request to deliver a translated electric comic book from the client terminal, the first payment demand information being utilized to demand payment for consideration corresponding to at least one of the original electric comic book data, the mask data and the translation data;
a first response receiver for receiving a response to the payment demand of the consideration indicated by the first payment demand information from the client terminal; and
a translated electric comic-book transmitter for transmitting the original electric comic book data, the mask data indicating the mask sheet to be displayed in the mask layer above the original electric comic book layer for displaying each cartoon sheet of the original electric comic book indicated by the original electric comic book data, and the translation data indicating the translation character description sheet to be displayed in the translation character layer above the mask layer for displaying the mask sheet indicated by the mask data, to the client terminal via the communication network in the case
where the contents of the response received by the first response receiver indicate that the payment for the consideration is approved.

14. The system according to claim 13, wherein the server further comprises:
a second payment demander for transmitting second payment demand information to other client terminal in response to a request to deliver only the original electric comic book data from the other client terminal, the second payment demand information being utilized to demand payment for consideration corresponding to the original electric comic book data, the other client terminal being connected to the communication network;
a second response receiver for receiving a response to the payment demand of the consideration indicated by the second payment demand information from the other client terminal;
an electric comic-book transmitter for transmitting the original electric comic book data to the other client terminal via the communication network in the case where the contents of the response received by the second response receiver indicate that the payment for the consideration is approved;
a mask data receiver for receiving, from the other client terminal via the communication network, mask data created using a mask data creating function of the other client terminal, the created mask data indicating the mask sheet to be displayed in the mask layer above the original electric comic book layer for displaying each cartoon sheet of the original electric comic book transmitted by the electric comic-book transmitter;
a translation data receiver for receiving, from the other client terminal via the communication network, translation data created using a translation data creating function of the other client terminal, the created translation data indicating the translation character description sheet to be displayed in the translation character layer above the mask layer for displaying the mask sheet indicated by the mask data; and
a data register unit for respectively registering the mask data and the translation data thus received with the mask data database and the translation data database so as to be associated with the original electric comic book data transmitted by the electric comic-book transmitter.

15. The system according to claim 13, wherein the server further comprises:
a second payment demander for transmitting second payment demand information to other client terminal in response to a request to deliver only the original electric comic book data from the other client terminal, the second payment demand information being utilized to demand payment for consideration corresponding to the original electric comic book data, the other client terminal being connected to the communication network;
a second response receiver for receiving a response to the payment demand of the consideration indicated by the second payment demand information from the other client terminal;
an electric comic-book transmitter for transmitting the original electric comic book data to the other client terminal via the communication network in the case where the contents of the response received by the second response receiver indicate that the payment for the consideration is approved;
a third payment demander for transmitting third payment demand information to other client terminal in response to a request to deliver only the mask data from the other client terminal, the third payment demand information being utilized to demand payment for consideration corresponding to the mask data;
a third response receiver for receiving a response to the payment demand of the consideration indicated by the third payment demand information from the other client terminal;
a mask data transmitter for transmitting the mask data to the other client terminal via the communication network in the case where the contents of the response received by the third response receiver indicate that the payment for the consideration is approved;
a translation data receiver for receiving, from the other client terminal via the communication network, translation data created using a translation data creating function of the other client terminal, the created translation data indicating the translation character description sheet to be displayed in the translation character layer above the mask layer for displaying the mask sheet indicated by the mask data, the mask data being transmitted by the mask data transmitter; and
a data register unit for registering the received translation data with the translation data database so as to be associated with the original electric comic book data transmitted by the electric comic-book transmitter.

16. A method of delivering an electric comic book to a client terminal via a communication network using a terminal, the method comprising:
transmitting first payment demand information to the client terminal in response to a request to deliver a translated electric comic book from the client terminal, the first payment demand information being utilized to demand payment for consideration corresponding to at least one of original electric comic book data, mask data and translation data, original electric comic book data indicating an original electric comic book obtained by computerizing the original comic book, the original electric comic book being constituted from at least one cartoon sheet, mask data indicating a mask sheet on which a mask color is drawn for masking character information of each cartoon sheet of the original electric comic book, the mask sheet being to be displayed in a mask layer above an original electric comic book layer for displaying each cartoon sheet of the original electric comic book, translation data indicating a translation character description sheet in which at least one translation character is described, the at least one translation character being used in place of at least one original character indicated by character information of each cartoon sheet of the original electric comic book, the at least one original character being masked by the mask color drawn on the mask sheet, the translation character description sheet being to be displayed in a translation character layer above the mask layer;
receiving a response to the payment demand of the consideration indicated by the first payment demand information from the client terminal; and
transmitting the original electric comic book data, the mask data indicating the mask sheet to be displayed in the mask layer above the original electric comic book layer for displaying each cartoon sheet of the original electric comic book indicated by the original electric comic book data, and the translation data indicating the translation character description sheet to be displayed in the translation character layer above the mask layer for displaying the mask sheet indicated by the mask data, to the client terminal via the communication network in the case where the contents of the response received in the receiving the response to the payment demand of the consideration indicated by the first payment demand information, indicate that the payment for the consideration is approved.

17. The method according to claim 16, further comprising:
transmitting second payment demand information to other client terminal in response to a request to deliver only the original electric comic book data from the other client terminal, the second payment demand information being utilized to demand payment for consideration corresponding to the original electric comic book data, the other client terminal being connected to the communication network;
receiving a response to the payment demand of the consideration indicated by the second payment demand information from the other client terminal;
transmitting the original electric comic book data to the other client terminal via the communication network in the case where the contents of the response received in the receiving a response to the payment demand of the consideration indicated by the second payment demand information indicate that the payment for the consideration is approved;
receiving, from the other client terminal via the communication network, mask data created using a mask data creating function of the other client terminal, the created mask data indicating the mask sheet to be displayed in the mask layer above the original electric comic book layer for displaying each cartoon sheet of the original electric comic book transmitted in the transmitting the original electric comic book data;
receiving, from the other client terminal via the communication network, translation data created using a translation data creating function of the other client terminal, the created translation data indicating the translation character description sheet to be displayed in the translation character layer above the mask layer for displaying the mask sheet indicated by the mask data; and
respectively registering the mask data and the translation data thus received with a mask data database in which the mask data is to be stored and a translation data database in which the translation data is to be stored so as to be associated with the original electric comic book data transmitted in the transmitting the original electric comic book data.

18. The method according to claim 16, further comprising:
transmitting second payment demand information to other client terminal in response to a request to deliver only the original electric comic book data from the other client terminal, the second payment demand information being utilized to demand payment for consideration corresponding to the original electric comic book data, the other client terminal being connected to the communication network;
receiving a response to the payment demand of the consideration indicated by the second payment demand information from the other client terminal;
transmitting the original electric comic book data to the other client terminal via the communication network in the case where the contents of the response received in the receiving the response to the payment demand of the consideration indicated by the second payment demand information indicate that the payment for the consideration is approved;
transmitting third payment demand information to other client terminal in response to a request to deliver only the mask data from the other client terminal, the third payment demand information being utilized to demand payment for consideration corresponding to the mask data;
receiving a response to the payment demand of the consideration indicated by the third payment demand information from the other client terminal;
transmitting the mask data to the other client terminal via the communication network in the case where the contents of the response received in the receiving the response to the payment demand of the consideration indicated by the third payment demand information indicate that the payment for the consideration is approved;
receiving, from the other client terminal via the communication network, translation data created using a translation data creating function of the other client terminal, the created translation data indicating the translation character description sheet to be displayed in the translation character layer above the mask layer for displaying the mask sheet indicated by the mask data, the mask data being transmitted in the transmitting the mask data; and
registering the received translation data with a translation data database in which the translation data is to be stored so as to be associated with the original electric comic book data transmitted in the transmitting the original electric comic book data.
